# FASCICULE DE BREVET EUROPEEN

(11) **EP 4 248 191 B1**
(45) Date de publication et mention de la délivrance du brevet: **13.08.2025**
(21) Numéro de dépôt: 21815435.9
(22) Date de dépôt: 17.11.2021
(51) Int. Cl.: G01N 21/53, G01N 21/05, G01N 21/47, G01N 21/64

(54) **PROCÉDÉ DE MESURE DE SOLUBILISATION DE PARTICULES PAR DES CELLULES VIVANTES ET/OU LEURS PRODUITS DÉRIVÉS ET KIT ASSOCIÉ**
VERFAHREN ZUR MESSUNG DER SOLUBILISIERUNG VON PARTIKELN DURCH LEBENDE ZELLEN UND/ODER DIE ABGELEITETEN PRODUKTE DAVON UND ZUGEHÖRIGES KIT
METHOD FOR MEASURING SOLUBILISATION OF PARTICLES BY LIVING CELLS AND/OR THE DERIVED PRODUCTS THEREOF AND ASSOCIATED KIT

(30) Priorité: 17.11.2020 FR 2011793
(43) Date de publication de la demande: 27.09.2023
(73) Titulaire: Gold Standard Diagnostics Millidrop, 44300 Nantes (FR); Ecole Supérieure de Physique et de Chimie Industrielles de la Ville de Paris, 75005 Paris (FR); Paris Sciences et Lettres, 75006 Paris (FR); Centre National de la Recherche Scientifique, 75016 Paris (FR)
(72) Inventeur: BOITARD, Laurent, 95100 ARGENTEUIL (FR); COTTINET, Denis, 92120 MONTROUGE (FR); BALZAN, Riccardo, 94400 VITRY-SUR-SEINE (FR); BAUDRY, Jean, 75011 PARIS (FR); CHENON, Guilhem, 75011 PARIS (FR); GOLDSTEIN, Arthur, 75014 PARIS (FR); FERHOUT, Hicham, 31500 TOULOUSE (FR)
(74) Mandataire: Ipsilon
(86) Numéro de dépôt international: PCT/EP2021/081918
(87) Numéro de publication internationale: WO 2022/106439

(56) Documents cités:
- WO-A1-2019/007674
- US-A1- 2007 244 050
- US-B2- 6 788 409
- LOWE P A ET AL: "SOLUBILISATION, REFOLDING AND PURIFICATION OF EUKARYOTIC PROTEINS EXPRESSED IN E. COLI", PROTEIN PURIFICATION : MICRO AND MACRO. FRISCO, MAR. 29 - APR. 4, 1987; [PROCEEDINGS OF THE CETUS - UCLA SYMPOSIUM ON PROTEIN], NEW YORK, ALAN R. LISS, US, April 1987 (1987-04-01), pages 429 - 442, XP002930581
- DAVID J MIDGLEY ET AL: "Access to organic and insoluble sources of phosphorus varies among soil Chytridiomycota", ARCHIVES OF MICROBIOLOGY, SPRINGER, BERLIN, DE, vol. 186, no. 3, 26 July 2006 (2006-07-26), pages 211 - 217, XP019419708, ISSN: 1432-072X, DOI: 10.1007/S00203-006-0136-2
- MOUNIRA BEN FARHAT ET AL: "Characterization of the mineral phosphate solubilizing activity of Serratia marcescens CTM 50650 isolated from the phosphate mine of Gafsa", ARCHIVES OF MICROBIOLOGY, SPRINGER, BERLIN, DE, vol. 191, no. 11, 22 September 2009 (2009-09-22), pages 815 - 824, XP019756288, ISSN: 1432-072X, DOI: 10.1007/S00203-009-0513-8
- SEBASTIAN WOJCIECH PRZEMIENIECKI ET AL: "Abstract", JOURNAL OF PLANT PROTECTION RESEARCH, vol. 54, no. 4, 30 January 2014 (2014-01-30), XP055295874, DOI: 10.2478/jppr-2014-0061
- O'SULLIVAN C ET AL: "The effect of biomass density on cellulose solubilisation rates", BIORESOURCE TECHNOLOGY, ELSEVIER, AMSTERDAM, NL, vol. 99, no. 11, 19 November 2007 (2007-11-19), pages 4723 - 4731, XP022606277, ISSN: 0960-8524, [retrieved on 20071119], DOI: 10.1016/J.BIORTECH.2007.09.070

## Description

La présente invention concerne un procédé de mesure de solubilisation de particules par des cellules vivantes ou leurs produits dérivés tels que des extraits, des enzymes, des surnageants de cultures, des métabolites.

La solubilisation désigne ici tout processus qui conduit au passage en solution d'un précipité ou d'un cristal ou d'un solide. Les processus physique et chimique qui peuvent intervenir sont par exemple, sans être exhaustif, l'hydrolyse, une dégradation par modification de fonction chimique, la catalyse ou lyse, la décomposition, la chélation d'ions ou de contre ions, le changement de pH, la production de corps gras, de molécules amphiphiles ou d'alcool, toute modification chimique ou physique causée par les cellules vivantes ou leurs dérivés qui conduise à la réduction de la masse totale de particules.

La littérature scientifique contient des exemples de microorganismes capables d'effectuer une réaction chimique, ou de se développer uniquement en présence d'un autre microorganisme *(*Stewart EJ. Growing unculturable bacteria. J Bacteriol. 2012;194(16):4151-60*;* Odom JM, Wall JD. Photoproduction of H2 from cellulose by an anaerobic bacterial coculture. Appl Environ Microbiol. 1983;45(4):1300-5 *;* Zhang Q, He J, Tian M, Mao Z, Tang L, Zhang J, et al. Enhancement of methane production from cassa va residues by biological pretreatment using a constructed microbial consortium. Bioresour Technol [Internet]. 2011;102(19):8899-906*).*

Des consortia sont parfois nécessaires pour venir à bout de composés particulièrement inertes chimiquement comme la ligno-cellulose (Puentes-Téllez PE, Falcao Salles J. Construction of Effective Minimal Active Microbial Consortia for Lignocellulose Degradation. Microb Ecol. 2018 ; 76(2):419-29*).*

Un procédé couramment mis en oeuvre comporte l'utilisation de plaques d'agar-agar disposées dans des boîtes de Petri et contenant des particules à solubiliser, par exemple des particules de phosphate de calcium. Des cellules individuelles sont étalées sur la surface des plaques et se multiplient jusqu'à former une colonie cellulaire. Les colonies cellulaires sont appelées clones, de telles colonies constituent un amas de cellules issues d'une cellule individuelle.

Les cellules sont, par exemple, des microorganismes comme des bactéries, des levures ou des champignons filamenteux. Les systèmes sur plaques permettent de quantifier et d'identifier les cellules.

Les boîtes de Petri sont placées en incubation entre deux et quatre jours.

Sur une boîte de Petri, les phénomènes de solubilisation ou d'hydrolyse sont généralement détectables par un changement de couleur ou de turbidité, typiquement par la formation d'auréoles transparentes autour des colonies.

A titre d'exemple de ces méthodes, on peut citer les documents Midgley et al, « Access to organic and insolubles sources of phosphorus varies among soil Chytridiomycota », Archives of Microbiology (2006) 186 :211-217, et Przemieniecki et al, « The effect of psychrotrophic bacteria isolated from the root zone of winter wheat on selected biotic and abiotic factors », Journal of Plant Protection Research (2014) Vol. 54, No.4.

Cependant, un tel procédé est long, ne repose que sur l'observation subjective d'un utilisateur, et est peu quantitatif.

En outre, avec l'exemple du phosphate de calcium, certains microorganismes dissolvent le phosphate de calcium sans former d'auréole visible (voir par exemple Nautiyal CS. An efficient microbiological growth medium for screening phosphate solubilizing microorganisms. FEMS Microbiol Lett [Internet]. 1999;170(436):265-70).

D'autres méthodes visent à détecter grâce à des substrats colorés ou fluorescents des activités enzymatiques connues comme étant impliquées dans la solubilisation ou l'utilisation du composé cible (phytate, chitine, cellulose...). Ces méthodes permettent une détection simple car si le substrat est modifié par l'enzyme étudiée, il se produit un changement de couleur ou de fluorescence qui est généralement simple à détecter par observation directe ou en spectroscopie. Mais la méthode ne peut cibler que des activités connues et documentées car elle dépend de l'existence ou de la synthèse à façon de substrat spécifique d'une enzyme ou famille d'enzyme.

Le document O'Sullivan et al, « The effect of biomass density on cellulose solubilisation rates », Bioresource Technology 99 (2008) 4723-4731 divulgue des méthodes indirectes par dosage des produits et coproduits (gaz et biomasse) issus de la solubilisation et de la métabolisation de la cellulose.

Par ailleurs, certains phénomènes comme la solubilisation du phosphate de calcium ne sont pas liés à une activité enzymatique, mais à la sécrétion de molécules, comme les acides organiques, pour lesquels il n'existe pas de méthode simple et spécifique pour les détecter.

Le document Farhat et al, « Characterization of the mineral phosphate solubilizing activity of Serratia marcescens CTM 50650 isolated from the phosphate mine of Gafsa », Archives of Microbiology (2009) 191:815-824 divulgue le dosage de phosphore soluble ou P₂O₅ du surnageant par colorimétrie.

Le document US 2007/244050 A1 divulgue une mesure de la solubilisation réalisée sur des agrégats de protéines par l'absorbance de lumière ultraviolette, en mesurant l'intensité transmise dans la direction du faisceau incident sur l'échantillon.

Le document Lowe et al, « Solubilisation, refolding and purification of eukaryotic proteins expressed in E.coli », Protein Purification: Micro to Macro (1987) 429-442 décrit la solubilisation de protéines de la bactérie E.coli par l'utilisation de dénaturants tels que l'urée.

Enfin les approches génomiques et métagénomiques permettent de rechercher par le séquençage la présence de gènes ayant des séquences similaires à des gènes connus pour être impliqués dans la mobilisation du composé ciblé. Cependant par cette méthode, la recherche est à nouveau limitée à ce qui est déjà connu en recherchant les similarités, et cette méthode ne garantit pas que les gènes ainsi détectés sont effectivement exprimés, exprimables, ou suffisants pour réaliser la mobilisation pour le microorganisme du composé cible.

Le document US 6788409 B2 divulgue une méthode de cytométrie de flux pour tester la solubilité de composants. L'échantillon passe dans une cellule de flux traversée par un faisceau laser perpendiculaire au flux. La géométrie du flux et du faisceau sont tels que les particules passent individuellement dans le faisceau et l'on peut détecter un flash pour chacun de ces objets.

La technique décrite dans ce document n'est pas adaptée pour la mesure de solubilisation au cours du temps et pour l'incubation de nombreux échantillons.

Le document WO 2019/007674 A1 divulgue un procédé d'analyse et de culture cellulaire dans un train de gouttes généré et mis en circulation dans un tube, les étapes du procédé étant effectuées dans une atmosphère contrôlée.

Un but de l'invention est de fournir un procédé permettant de façon simple, de discriminer des cellules vivantes et/ou leurs produits dérivés capables de solubiliser des particules dans des échantillons variés et pour de multiples applications.

A cet effet, l'invention a pour objet un procédé de mesure de solubilisation de particules par au moins une cellule vivante et/ou au moins un produit dérivé de cellule vivante, le procédé comprenant les étapes suivantes :
- la fourniture de particules à solubiliser en suspension stable, les particules d'une suspension étant de composition chimique identique,
- la génération d'au moins une goutte comprenant au moins une particule à solubiliser de la suspension stable de particules et un milieu de culture susceptible de contenir au moins une cellule vivante et/ou au moins un produit dérivé de cellule vivante en suspension,
- l'introduction de la goutte dans un tube,
- l'incubation de la goutte dans le tube,
- l'éclairage du tube par un faisceau lumineux incident, et
- la mesure à différents instants de la quantité de lumière du faisceau lumineux diffusée transversalement au faisceau incident par la goutte dans le tube. Le procédé de mesure de solubilisation de particules par au moins une cellule vivante et/ou au moins un produit dérivé de cellule vivante selon l'invention peut comprendre l'une ou plusieurs des caractéristiques suivantes, prises isolément ou suivant toute combinaison techniquement possible :
   - le procédé comprend en outre la comparaison des valeurs obtenues aux différents instants pour chaque goutte et la détermination à l'issue de cette comparaison de la présence ou de l'absence dans la goutte de cellules vivantes et/ou de leurs produits dérivés capables de solubiliser la particule ;
   - le procédé comprend en outre une étape de mesure de la quantité de cellules vivantes et/ou de leurs produits dérivés présents dans la goutte aux différents instants ;
   - les particules de la suspension stable sont en suspension dans une solution aqueuse comprenant au moins une substance stabilisant la suspension de particules ;
   - le tube présente un diamètre intérieur compris entre 0,1 mm et 3 mm ;
   - au moins 90% des particules dans la suspension stable présentent un rayon compris entre 10 nm et 10 µm, de préférence compris entre 100 nm et 500 nm ;
   - au moins une goutte contient au moins une particule à solubiliser de la suspension stable de particules et un milieu de culture contenant au moins une cellule vivante et/ou au moins un produit dérivé de cellule vivante en suspension ;
   - le procédé comprend la génération d'un train de gouttes ordonnées dans un fluide porteur, le train de gouttes comprenant au moins une goutte comprenant au moins une particule à solubiliser en suspension stable et un milieu de culture susceptible de contenir au moins une cellule vivante et/ou au moins un produit dérivé de cellule vivante en suspension ;
   - l'étape de mesure de la quantité de cellules vivantes et/ou de leurs produits dérivés présents dans la goutte aux différents instants comprend la mesure d'un signal de fluorescence associé à la respiration ou à la modification du pH du milieu par les cellules vivantes et/ou leurs produits dérivés présents dans la goutte. L'invention a également pour objet un kit adapté pour la mise en oeuvre du procédé de mesure selon l'invention, comprenant des particules en suspension stable, les particules d'une suspension étant de composition chimique identique, un milieu de culture adapté pour cultiver des cellules vivantes en suspension susceptibles de solubiliser lesdites particules et un système de culture de cellules vivantes et de mesure de solubilisation de particules par au moins une cellule vivante et/ou au moins un produit dérivé de cellule vivante comprenant au moins:
      - un tube,
      - un module de génération d'un train de gouttes ordonnées dans un fluide porteur,
      - un dispositif de mise en circulation du train de gouttes dans le tube,
      - un dispositif d'incubation du train de gouttes dans le tube, et
      - un dispositif de mesure comprenant un dispositif de projection d'un faisceau lumineux incident vers le tube et de mesure de la quantité de lumière diffusée transversalement au faisceau incident.

Le kit selon l'invention peut comprendre l'une ou plusieurs des caractéristiques suivantes, prises isolément ou suivant toute combinaison techniquement possible :
- le dispositif de mesure est propre à mesurer la quantité de cellules vivantes et/ou de leurs produits dérivés présents dans une goutte ;
- les particules en suspension sont des particules d'hydroxyapatite en suspension dans une solution aqueuse comprenant du polyacrylate et le milieu de culture comprend un sucre, du sulfate d'ammonium, du chlorure de potassium, du sulfate de magnésium, du sulfate de manganèse et du sulfate de fer.
- le milieu de culture est dépourvu de sucre ou toute autre source de carbone et d'énergie, et dans lequel les particules en suspension constituent la seule source de carbone et d'énergie pour la croissance de cellules vivantes ;
- les particules en suspension sont des particules de chitine, ou les particules en suspension sont des particules de cellulose, ou les particules en suspension sont des particules de lignine, ou les particules en suspension sont des particules microplastiques, ou les particules en suspension sont des particules de polysaccharide.

L'invention sera mieux comprise à la lecture de la description qui va suivre, donnée uniquement à titre d'exemple et faite en se référant aux dessins annexés, sur lesquels :

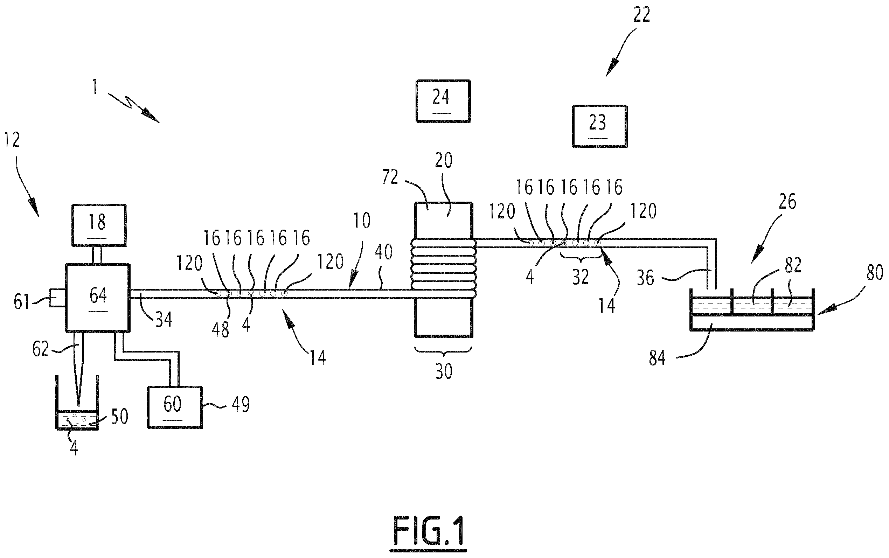

[Fig.1] la figure 1 est une représentation schématique d'un système de culture de cellules vivantes et de mesure de solubilisation de particules par des cellules vivantes et/ou leurs produits dérivés ;

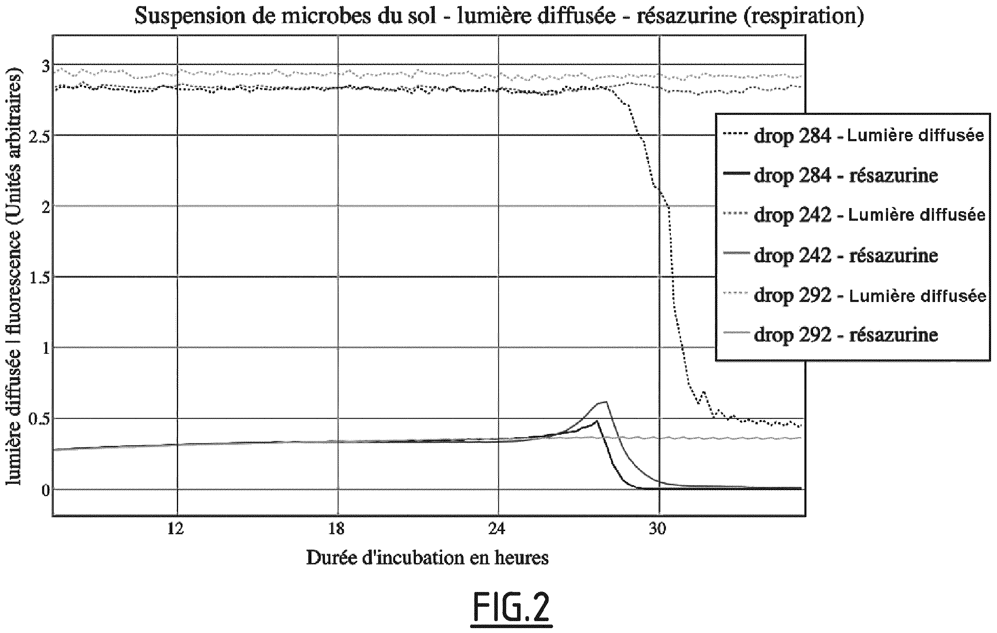

[Fig.2] la figure 2 est un graphique représentant l'évolution de quantité de lumière diffusée par des gouttes transversalement à un faisceau incident ainsi que l'évolution de fluorescence dans les gouttes en fonction de la durée d'incubation, la lumière étant projetée à travers un tube comprenant une pluralité de gouttes, chaque goutte comprenant des particules en suspension et un marqueur fluorescent, certaines gouttes comprenant au moins une cellule vivante et/ou un produit dérivé de cellule vivante capable de solubiliser les particules en suspension ; et

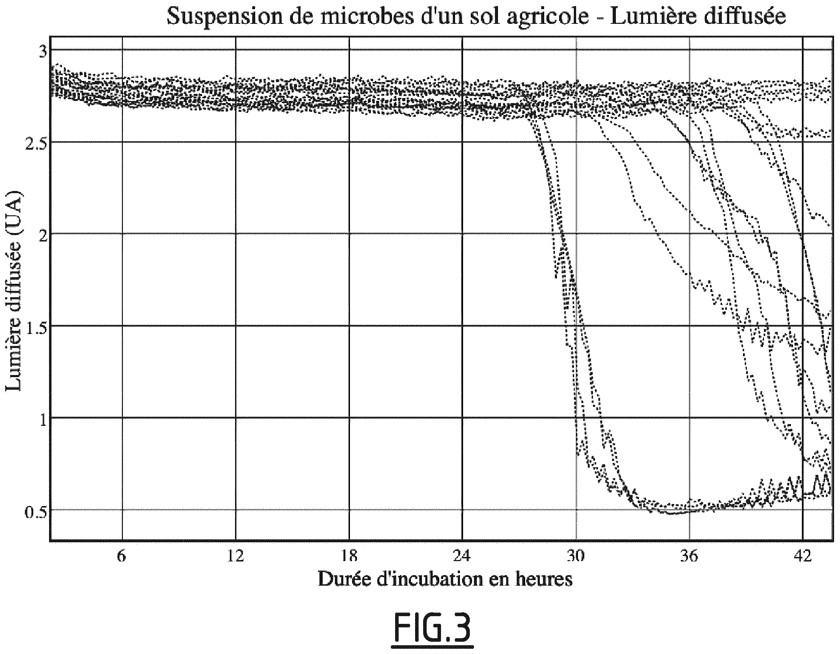

[Fig.3] la figure 3 est un graphique représentant l'évolution de quantité de lumière diffusée par des gouttes transversalement à un faisceau incident dans les gouttes en fonction de la durée d'incubation, la lumière étant projetée à travers un tube comprenant une pluralité de gouttes, chaque goutte comprenant des particules en suspension, certaines gouttes comprenant au moins une cellule vivante et/ou un produit dérivé de cellule vivante capable de solubiliser les particules en suspension.

La figure 1 illustre un système 1 de culture de cellules vivantes 4 et de mesure de solubilisation de particules par des cellules vivantes 4 et/ou leurs produits dérivés.

Les cellules vivantes 4 sont par exemple des microorganismes.

Les microorganismes sont par exemple des microorganismes du sol, du sous-sol, du microbiote intestinal humain ou animal, ou des microorganismes génétiquement modifiés, ou des microorganismes marins.

A titre d'exemple non limitatif, on peut citer les microorganismes suivants : *Bacillus amyloliquefaciens, Bacillus megaterium, Bacillus radicola, Bacillus subtilis, Clostridium subterminale, C. sordellii, C. sporogenes, C. indolis, C. bifermentans, C. mangenoti, C. perfringens, C. botulinum, C. tetani, Coniothyrium minitans, Desulfobacterium cathecholicum, Escherichia coli, Lactobacillus rhamnosus, Lactobacillus faciminis, - Methano-bacterium Micrococcus cerificans Mycobacterium vaccae, Pseudomonas aeruginosa, Pseudomonas spp, Rhizobium.*

Les microorganismes peuvent contenir plusieurs espèces ou variétés ou clones différents. Par exemple on peut préparer les microorganismes pour tester en parallèle la solubilisation des particules pour des clones ou des espèces différentes mais évaluées individuellement. Dans un autre exemple, on peut tester la solubilisation pour des mélanges de plusieurs clones ou plusieurs espèces de manières à tester des combinaisons différentes de ces clones ou de ces espèces pour la solubilisation.

Les microorganismes sont par exemple destinés à être utilisés pour des procédés de bioproduction, pour des stratégies de dépollution de l'eau ou des sols, pour de la fermentation agroalimentaire, pour la biostimulation en agriculture.

Les cellules vivantes 4 sont par exemple des cellules animales.

Les cellules animales sont par exemple des ostéoclastes. L'étude de solubilisation de particules en présence de cellules animales peut également permettre d'étudier la toxicité potentielle de matériaux ou leur élimination par les cellules animales (Riediker et al. (2019), Particle Toxicology and health - where are we ?, Particle and Fibre Toxicology 16, 19).

Les produits dérivés des cellules vivantes sont par exemple des extraits, des enzymes, des surnageants de cultures, des métabolites.

Les enzymes sont par exemple : des cellulases (endo-cellulases, exo-cellulases, β-glucosidases, cellulose phosphorylases, pectinases, hémicellulases), des ligninases, des chitinases (chitodextrinase, 1,4-beta-poly-N-acetylglucosaminidase, poly-beta-glucosaminidase, beta-1,4-poly-N-acetyl glucosamidinase, poly[1,4-(N-acetyl-beta-D-glucosaminide)] glycanohydrolase, (1→4)-2-acetamido-2-deoxy-beta-D-glucan glycanohydrolase), ou encore peptidases, amylases, lipases, xylanases, glucanases.

Les enzymes sont par exemple utilisées pour des procédés de synthèse chimique, pour des produits nettoyants comme la lessive ou les détachants, pour l'agroalimentaire pour moduler les procédés de fermentation, pour la transformation de matière première végétale comme pour la fabrication de papier, pour transformer l'amidon, ou comme compléments alimentaires.

Le système 1 comprend un tube 10, un module de génération 12 d'un train 14 de gouttes 16 destiné à circuler dans le tube 10, un dispositif de mise en circulation 18 du train 14 de gouttes 16 dans le tube 10, un dispositif d'incubation 20 du train 14 de gouttes 16 dans le tube 10, un dispositif de mesure 22 comprenant un dispositif 23 de projection d'un faisceau lumineux incident vers le tube et de mesure de la quantité de lumière diffusée transversalement au faisceau incident, une unité centrale 24, et un dispositif de récupération 26.

Le tube 10 est un tube capillaire ou tube fluidique à l'échelle millimétrique c'est-à-dire présentant un diamètre intérieur de l'ordre du dixième de millimètre au millimètre, de préférence compris entre 0,1 et 3 mm.

Le tube 10 est par exemple réalisé en polymère d'éthylène fluoré, tel que l'éthylène propylène fluoré, ou le polytétrafluoroéthylène.

Le tube 10 est transparent, de sorte à laisser passer la lumière qui le traverse.

Le tube 10 présente une section transversale intérieure de contour arrondi, tel que circulaire ou elliptique, ou polygonale telle que rectangulaire.

Le tube 10 présente une zone d'incubation 30 et une zone de mesure 32.

En outre, le tube 10 présente une extrémité d'entrée 34 et une extrémité de sortie 36.

Le module de génération 12 d'un train 14 de gouttes 16 est propre à générer un train 14 de gouttes 16. Un train 14 de gouttes 16 est une succession de gouttes 16 ordonnées dans un fluide porteur 40.

Le fluide porteur 40 est, avantageusement, une phase organique, notamment une phase huileuse. Le fluide porteur 40 comprend, par exemple, des perfluorocarbones comme FC-40 ou des hydrofluoroéthers comme HFE-7500, formant une huile fluorée. En variante, le fluide porteur 40 comprend une huile silicone ou une huile organique telle que de l'huile minérale.

Le fluide porteur 40 est apte à séparer deux gouttes 16 successives du train 14 de gouttes 16.

Le train 14 de gouttes 16 comprend avantageusement des séparateurs 120. Un séparateur 120 est une bulle de gaz.

Le séparateur 120 favorise l'espacement entre deux gouttes 16 successives du train 14 de gouttes 16 pour prévenir le contact ou la fusion des gouttes 16.

Dans un exemple non représenté, le train 14 de gouttes 16 comprend un séparateur 120 entre chaque goutte 16.

Chaque goutte 16 du train 14 de gouttes 16 constitue un compartiment fermé rempli de fluide interne 48.

Chaque goutte 16 comprend un fluide interne 48 non miscible avec le fluide porteur 40. On entend par non miscible que le coefficient de partage entre les deux fluides est inférieur à 10⁻³. Le fluide interne 48 est, avantageusement, une phase aqueuse.

Le volume des gouttes 16 du train 14 de gouttes 16 est, par exemple, compris entre 1 nL et 1 mL, de préférence entre 100 nL et 4 µL, en particulier sensiblement égal à 600 nL.

Dans un exemple, le volume des gouttes 16 est sensiblement le même d'une goutte 16 à l'autre.

Chaque goutte 16 comprend avant incubation au moins une particule 49 à solubiliser en suspension stable.

Par « suspension stable », il est entendu que la densité de particules proche de la surface pour une suspension mise au repos après dispersion, ne diminue pas de plus de 25% en 1 heure. Par exemple dans une des réalisations, la densité de la suspension proche de la surface ne diminue pas de plus de 1% en 40 minutes.

Par « proche de la surface », il est entendu entre 0 mm et 5 mm de la surface libre supérieure de la suspension.

La suspension stable est composée des particules 49 dispersées dans une solution aqueuse.

Dans le cas où une goutte 16 comprend une pluralité de particules 49, les particules 49 d'une goutte 16 sont de composition chimique identique. En d'autres termes, chaque goutte 16 permet de tester la capacité de cellules vivantes 4 et/ou de leurs produits dérivés à solubiliser des particules 49 d'une seule composition chimique.

La composition chimique des particules 49 est choisie selon la fonction de solubilisation étudiée chez les cellules vivantes 4 et/ou leurs produits dérivés.

Avantageusement, les particules 49 choisies sont suffisamment peu solubles pour rester sous forme précipitée mais sont susceptibles d'être dissoutes en cas de changement du milieu, par exemple l'apparition d'enzymes capables d'hydrolyser les particules 49 ou une variation de pH.

Par exemple, les particules 49 à solubiliser contiennent du phosphate et permettent la discrimination de cellules vivantes ou leurs produits dérivés capables de solubiliser le phosphate.

En variante, les particules à solubiliser contiennent de la chitine, du phytate, de la cellulose, des microplastiques, de la lignocellulose, de la lignine, des chaînes grasses ou des hydrocarbures, des protéiques ou peptides, ou tout autre composant dont la solubilisation par des cellules vivantes et/ou leurs produits dérivés est susceptible d'être étudiée.

Au moins 90 % des particules en suspension présentent par exemple un rayon compris entre 10 nm et 10 µm.

Avantageusement, au moins 90 % des particules en suspension présentent un rayon compris entre 100 nm et 500 nm.

Le rayon des particules est avantageusement mesuré avec un instrument de granulométrie adapté comme par exemple un instrument mesurant la diffusion dynamique de la lumière ou la diffraction LASER.

La taille des particules est choisie selon le matériau utilisé, en prenant notamment en compte sa densité et son indice de réfraction.

Pour optimiser le rayon des particules, le dispositif de mesure 22 utilisé est également pris en compte, en s'appuyant sur les théories de diffusion de la lumière comme les théories dites de Rayleigh, de Lorentz, de Mie. En particulier, on considère l'angle de mesure par rapport au faisceau incident, la polarisation et la longueur d'onde du faisceau incident, et l'ouverture numérique du système optique utilisé pour mesurer la lumière diffusée.

La suspension de particules comprend par exemple au moins une substance stabilisant la suspension de particules et/ou est ajustée à un pH adapté pour retarder l'agrégation de particules.

La substance stabilisant la suspension de particules est par exemple un agent antiagrégant.

La quantité d'agent antiagrégant nécessaire pour stabiliser une suspension dépend de la granularité des particules et de leur surface totale par unité de volume de la suspension.

L'agent antiagrégant est par exemple un tensioactif ou un polymère dispersant.

La composition de la suspension de particules et des agents antiagrégants utilisés ne doivent pas nuire à la survie ou à l'activité des cellules vivantes 4 et/ou de leurs produits dérivés. Leur effet sur la croissance ou la survie des cellules vivantes 4 peut être vérifié indépendamment de la mesure de solubilisation en vérifiant si l'ajout des substances à des concentrations représentatives dans un milieu de culture 50 altère la croissance ou l'activité des cellules vivantes 4 et/ou de leurs produits dérivés.

Le polymère dispersant est par exemple du polyacrylate en solution aqueuse.

Le polyacrylate utilisé est choisi avec une masse moléculaire moyenne (Mw) comprise entre 1 kDa et 100 kDa, en particulier une masse moléculaire moyenne de 15 kDa.

La concentration d'agent antiagrégant dans la suspension est avantageusement comprise entre 30 mg/L et 400 mg/L pour 1g/L de particules, de préférence entre 35 mg/L et 350 mg/L pour 1g/L de particules.

Par exemple, la concentration d'agent antiagrégant dans la suspension est comprise entre 35 mg/L et 3500 mg/L pour 1g/l de particules d'hydroxyapatite de diamètre médian 400 nm.

L'agrégation peut aussi être retardée par une modification chimique de la surface des particules.

Lors de la préparation de la suspension de particules, le mélange est avantageusement traité avec une sonde à ultrasons pour garantir une bonne dispersion des particules. En particulier, pour préparer 20mL de la suspension de particules d'hydroxyapatite, on applique des ultrasons à la fréquence de 20kHz pour une puissance de 750 watts et une énergie totale appliquée de 550 joules.

Chaque goutte 16 comprend en outre un milieu de culture 50.

Le milieu de culture 50 est un milieu de culture liquide adapté à la survie et à la croissance des cellules vivantes comme une solution tamponnée complétée avec des nutriments de culture, des vitamines, des donneurs et des accepteurs d'électrons, et adapté selon les particules à solubiliser.

Par solution tamponnée, on entend notamment une solution dont le pH est par exemple de 7.

Selon un premier exemple, le milieu de culture est un milieu riche comprenant un sucre, du sulfate d'ammonium, du chlorure de potassium, du sulfate de magnésium, du sulfate de manganèse et du sulfate de fer.

Le milieu de culture 50 comprend par exemple en outre du chlorure de sodium, du chlorure de calcium, de l'hydroxyde de sodium et de l'acide 2-(N-morpholino)éthanosulfonique.

Selon un deuxième exemple, le milieu de culture comprend des nanofibrilles de cellulose, ou des particules de chitine, en suspension comme seule source de carbone et d'énergie.

Selon un mode de réalisation particulier, chaque goutte 16 comprend un agent indicateur d'une activité des cellules vivantes et/ou de leurs produits dérivés, par exemple de leur respiration aérobie ou anaérobie.

Dans l'exemple présenté, l'agent indicateur révèle la respiration de la ou des cellules vivantes présentes dans la goutte 16.

La respiration indique la présence de cellules vivantes aérobies dans la goutte et discrimine ainsi les gouttes comprenant des organismes non solubilisateurs des gouttes ne comprenant pas de cellule vivante utilisant l'oxygène.

En effet, la consommation d'oxygène combinée à l'absence de solubilisation de la particule à solubiliser indique la présence de de cellules vivantes n'étant pas capables de solubiliser la particule à solubiliser.

L'agent indicateur de la respiration est par exemple un indicateur coloré. L'agent indicateur de la respiration est, par exemple, la résazurine.

Dans un autre exemple, la consommation d'oxygène peut être mesurée avec un indicateur de l'oxygène, par exemple MitoXpress^{®} Xtra (Luxcel Biosciences).

Selon un mode de réalisation particulier, chaque goutte 16 comprend un agent indicateur de la valeur de pH.

L'agent indicateur de pH révèle l'acidification ou l'alcalinisation de la goutte causée par la présence de certaines cellules vivantes. Cette mesure du pH peut permettre de discriminer différents mécanismes de solubilisation.

L'agent indicateur de la valeur de pH est par exemple un indicateur coloré. L'agent indicateur de la valeur de pH est, par exemple, la pyranine.

De la même façon que la respiration, l'acidification ou l'alcalinisation de la goutte indique la présence de certaines cellules vivantes dans la goutte et discrimine ainsi les gouttes comprenant des cellules vivantes non solubilisateurs des gouttes ne comprenant pas de cellules vivantes.

La possibilité de compter les gouttes ne contenant pas de cellules vivantes détectables, les gouttes contenant des cellules vivantes détectés et solubilisatrices et les gouttes contenant des cellules vivantes détectées mais non-solubilisatrices, permet de déterminer pour un échantillon analysé l'abondance totale de cellules vivantes cultivables en gouttes et les abondances relatives de cellules vivantes solubilisatrices et non-solubilisatrices.

Selon un mode de réalisation particulier, chaque goutte 16 comprend un agent indicateur d'une activité d'au moins un produit dérivé de cellule vivante.

Par exemple, l'indicateur est une substance fluorescente propre à être greffée avec un lien chimique covalent sur au moins un constituant des produits dérivés.

Le module de génération 12 du train 14 de gouttes 16 comporte un ou une pluralité de réservoirs 60, un dispositif de prélèvement 62 et un circuit d'entrée 64.

Le module de génération 12 comporte, en outre, un réservoir complémentaire 61. Le réservoir complémentaire 61 comporte du fluide porteur 40.

Chaque réservoir 60 comprend un fluide nécessaire à la formation du train 14 de gouttes 16.

Par exemple, des réservoirs 60 sont différents compartiments d'une plaque de microtitration. En variante, les réservoirs 60 sont des tubes à essais tel que des tubes Falcon^{®} ou des microtubes comme ceux commercialisés par Eppendorf^{®}.

Un réservoir 60 comprend une suspension susceptible de contenir au moins une cellule vivante 4 et/ou au moins un produit dérivé de cellule vivante.

Dans le cas où la suspension comprend une pluralité de cellules vivantes 4, les cellules vivantes peuvent être de même espèce ou d'espèces différentes.

Un réservoir 60 comprend une suspension stable de particules 49 à solubiliser.

Par exemple, un réservoir 60 comporte le milieu de culture 50. Par exemple, d'autres réservoirs 60 contiennent des réactifs à mettre dans la goutte 16.

Par exemple, un réservoir 60 comprend un agent indicateur d'oxygène.

Par exemple, un réservoir 60 comprend un agent indicateur de pH.

Le dispositif de prélèvement 62 est propre à prélever des solutions dans chacun des réservoirs 60 de sorte à former un train 14 de gouttes 16 ordonnées dans le fluide porteur 40.

Le dispositif de prélèvement 62 est propre à préparer le train de gouttes dans le circuit d'entrée 64.

Par exemple, le dispositif de prélèvement 62 comporte un bras robotisé de pipetage. En variante ou en complément, le dispositif de prélèvement 62 comporte une tête d'aspiration. L'utilisation d'un dispositif de prélèvement 62 robotisé permet de limiter l'espace nécessaire aux manipulations.

Par exemple le dispositif de prélèvement 62 comprend un réservoir de gaz.

Le réservoir de gaz sert, par exemple, à mettre sous pression les différents réservoirs 60, 61 pour faciliter le prélèvement. Par exemple, le dispositif de prélèvement 62 est propre à injecter un fluide dans le circuit d'entrée 64 en poussant le fluide depuis le réservoir 60, 61 au moyen du gaz jusque dans le circuit d'entrée 64.

En variante ou en complément, le dispositif de prélèvement 62 comporte, une pompe d'aspiration placée à la sortie 36. La pompe est propre à aspirer les différents fluides et à placer les réservoirs 60,61 sous dépression. Par exemple, la pompe est un compresseur ou une pompe gerotor.

Le circuit d'entrée 64 est connecté à l'entrée 34 du tube 10. Le circuit d'entrée 64 comporte un dispositif de fragmentation propre à générer des gouttes 16 à partir de la suspension prélevée et d'un fluide porteur 40.

Par exemple, le circuit d'entrée 64 comprend un décrochement ou une marche facilitant la fragmentation des fluides et la génération des gouttes 16. En variante, le circuit d'entrée 64 comprend une jonction à focalisation de flux, dite jonction « flow focusing », ou une jonction T.

Le fluide porteur 40 est, par exemple, injecté, au niveau du circuit d'entrée 64, le long du tube d'aspiration 10 par le dispositif d'injection de sorte à former les gouttes 16 du train de gouttes 16 par co-écoulement.

Le dispositif de mise en circulation 18 du train 14 de gouttes 16 est propre à déplacer le train 14 de gouttes 16 au sein du tube 10 depuis l'entrée 34 jusqu'à la sortie 36.

Le dispositif de mise en circulation 18 comprend, par exemple, une unité de soufflage et/ou une unité d'aspiration.

Le dispositif de mise en circulation 18 est avantageusement propre à faire circuler le train 14 de gouttes 16 de la zone d'incubation 30 à la zone de mesure 32 puis de la zone de mesure 32 à la zone d'incubation 30. Les gouttes 16 peuvent ainsi être déplacées dans les deux sens dans le tube 10.

Par exemple, la zone de mesure 32 est située en aval de la zone d'incubation 30. Le dispositif de mise en circulation 18 est propre à faire passer la goutte 16 de la zone d'incubation 30 à la zone de mesure 32 pour mesurer le paramètre indicatif du contenu de la goutte 16. Le dispositif de mise en circulation 18 est également propre à faire passer la goutte 16 de la zone de mesure 32 à la zone d'incubation 30 pour poursuivre l'incubation de la goutte 16.

Le dispositif de mise en circulation 18 est propre à générer un débit du train 14 de gouttes 16 et de fluide porteur 40 dans le tube compris entre 0,1 mL/hr et 5 mL/hr.

Le dispositif d'incubation 20 est propre à contrôler la température de la zone d'incubation 30 du tube 10. Par exemple, le dispositif d'incubation 20 est propre à chauffer ou à refroidir la zone d'incubation 30 du tube à une température comprise entre 4° et 100°C, par exemple comprise entre 20 °C et 50°C et notamment à 28°C. Dans un exemple, pour cultiver et analyser des microorganismes du sol, la température est réglée à 28°C.

Le dispositif d'incubation 20 comprend une bobine 72 propre à être régulée en température, la partie du tube 10 correspondant à la zone d'incubation 30 étant enroulée autour de la bobine 72. Cet enroulement permet de réduire l'encombrement nécessaire pour avoir une grande longueur d'incubation.

Par exemple la longueur du tube 10 enroulée dans la zone d'incubation 30 est comprise entre 1 mètre et 100 mètres.

En variante, le dispositif d'incubation comprend une chambre délimitée par des parois d'isolation thermique, un élément chauffant et refroidissant tel qu'un module Peltier, un ventilateur permettant de faire circuler le gaz de convection de contenu et une sonde de température.

Le dispositif de mesure 22 est propre à mesurer un paramètre indicatif du contenu de la goutte dans le tube 10 au niveau de la zone de mesure 32 à différents instants.

De telles mesures successives permettent de réaliser pour chaque goutte 16 des courbes de cinétiques de solubilisation des particules 49 au sein de la goutte 16 au cours de l'incubation.

Les paramètres mesurés sont par exemple la diffusion de la lumière par le contenu des gouttes 16*,* l'absorption de lumière par le contenu des gouttes 16*,* l'absorption suivie d'une émission à une longueur d'onde différente appelée émission de fluorescence, le temps de vie de ladite émission de fluorescence, la réfraction ou la réflexion de la lumière.

Le dispositif de mesure 22 comprend un dispositif 23 de projection d'un faisceau lumineux incident vers le tube et de mesure de la quantité de lumière diffusée transversalement au faisceau incident.

La longueur d'onde de la lumière incidente est par exemple comprise entre 350 nm et 800 nm.

Dans un mode de réalisation le faisceau incident est produit avec un LASER ou une diode LASER.

Le dispositif 23 de projection est propre à effectuer une mesure de néphélométrie.

La néphélométrie est une technique de mesure de la turbidité d'un milieu et consiste à mesurer la lumière diffusée transversalement à la lumière incidente.

Le dispositif 23 de projection comprend une ou plusieurs sources émettrices de faisceaux lumineux, au moins une lentille, un filtre, un diaphragme et au moins un détecteur de photons.

Le détecteur de photons est par exemple une photodiode, un tube photomultiplicateur (PMT), une caméra équipée d'un récepteur à transferts de charge (CCD) ou de la technologie CMOS (« complementary metal-oxide-semiconductor »), ou tout autre capteur sensible aux flux de photons.

Par lumière diffusée transversalement au faisceau incident, il est entendu la lumière diffusée dans une direction différente de celle du faisceau incident. Par exemple on peut mesurer la lumière diffusée avec un angle par rapport au faisceau incident compris entre 80° et 100°, en particulier égal à 90°. La mesure de la lumière diffusée peut être réalisée en détectant la lumière diffusée ou en mesurant la variation d'intensité dans la direction du faisceau incident due à la lumière diffusée.

La lumière est diffusée par tout le contenu de la goutte traversant le faisceau incident, en particulier le faisceau LASER. La quantité mesurée n'est donc pas associée à une particule 49 mais à l'ensemble du contenu du volume délimité par l'intersection entre la goutte 16 et le faisceau incident. La taille de la goutte 16 et la taille du faisceau incident ne permettent pas de détecter un flash pour chaque particule 49.

Le volume délimité par l'intersection entre la goutte 16 et le faisceau incident contient davantage qu'une particule 49, la quantité de lumière diffusée mesurée est la somme des quantités de lumière diffusées par plusieurs particules 49 et plusieurs types de particules 49 dans la goutte 16.

Dans un mode de réalisation, la lumière diffusée dans un angle solide centré sur l'angle à 90° du faisceau incident est détectée en utilisant un système de lentille dont l'ouverture numérique est de 0,5.

Par exemple, le dispositif de mesure 22 est en outre propre à effectuer une mesure optique, comme une mesure de fluorescence, et/ou une analyse sur une image d'une goutte.

Avantageusement, pour associer les mesures à chaque goutte 16*,* le dispositif de mesure 22 est propre à mesurer au moins un paramètre discriminant les gouttes 16 des autres fluides circulant dans le tube 10. Cette mesure peut être utilisée pour compter les gouttes et les identifier.

Avantageusement, le dispositif de mesure 22 est propre à mesurer la quantité de cellules vivantes 4 et/ou de leurs produits dérivés présents dans une goutte 16 aux différents instants, par exemple par la mesure d'un signal de fluorescence issue d'une substance fluorescente dans la goutte 16.

Le signal peut être changé par la respiration ou par la modification du pH du milieu par les cellules vivantes 4, ou par une activité des produits dérivés de cellules vivantes, ou encore directement par la croissance des cellules vivantes 4 présentes.

Par quantité de cellules vivantes 4 et/ou de leurs produits dérivés présents, il est entendu soit la mesure d'un paramètre proportionnel au nombre cellules vivantes 4 et/ou de leurs produits dérivés dans la goutte ou la mesure d'un paramètre propre à discriminer les gouttes contenant au moins une cellule vivante 4 et/ou un produit dérivé de cellule vivante, des gouttes qui n'en contiennent aucun.

Par exemple, l'utilisation dans les gouttes de la resazurine, de la pyranine, de la fluorescéine, MitoXpress^{®} Xtra (Luxcel Biosciences) avec une des mesures associées à la fluorescence proposées dans le dispositif de mesure, permet de discriminer les gouttes contenant au moins une cellule vivante des gouttes qui n'en contiennent aucune.

Dans un exemple la resazurine est utilisée à une concentration finale dans la goutte 16 comprise entre 0,1µmol/L et 1mmol/L, ou encore entre 10 µmol/L et 100 µmol/L et typiquement à 90µmol/L.

Dans un autre exemple, la fluorescéine est utilisée à une concentration finale dans la goutte 16 comprise entre 50 nmol/L et 1mmol/L ou encore entre 1 µmol/L et 100 µmol/L et typiquement 10 µmol/L.

Par exemple, la mesure de la fluorescence naturelle des cellules vivantes permet d'évaluer le nombre de cellules vivantes dans chaque goutte.

Dans un autre exemple, pour certaines cellules vivantes, comme par exemple le microorganisme S. *Cerevisiae,* l'analyse des images de chaque goutte 16 acquise avec une caméra dans le dispositif de mesure 22 permet d'évaluer le nombre de microorganismes vivants dans chaque goutte 16.

Dans un autre exemple, l'analyse de la couleur du contenu des gouttes 16 permet d'évaluer le nombre de cellules vivantes, comme par exemple pour le microorganisme *Chlamydomonas reinhardtii.*

L'unité centrale 24 comporte une mémoire et un microprocesseur. L'unité centrale 24 est propre à enregistrer les données du dispositif de mesure 22 pour chaque goutte 16 du train 14 de gouttes 16.

Avantageusement, l'unité centrale 24 est propre à analyser les mesures effectuées pour une goutte 16 et à contrôler la récupération de la goutte 16 ou la poursuite de l'incubation selon le résultat de l'analyse.

Par exemple, la goutte 16 peut être récupérée pour identifier les cellules vivantes et/ou leurs produits dérivés qu'elle contient, ou bien les mettre en culture pour obtenir la croissance d'une souche ou d'un consortium de microorganismes isolé dans la goutte.

Le dispositif de récupération 26 est propre à permettre la récupération de chaque goutte 16 individuellement.

Le dispositif de récupération 26 comprend, par exemple, un récipient de récupération 80 comprenant plusieurs compartiments 82, et un dispositif de déplacement 84 du récipient de récupération 80 par rapport à la sortie 36 du tube 10 de sorte qu'un nouveau compartiment 82 soit placé en regard de la sortie 36 du tube pour chaque goutte 16 à récupérer.

Le système 1 est compris dans un kit comprenant en outre des particules 49 en suspension stable, les particules 49 d'une suspension étant de composition chimique identique, et un milieu de culture 50 adapté pour cultiver des cellules vivantes 4 en suspension susceptibles de solubiliser lesdites particules.

Un procédé de mesure de solubilisation de particules 49 par au moins une cellule vivante et/ou au moins un produit dérivé de cellule vivante va maintenant être décrit.

Le procédé comprend les étapes suivantes :
- la fourniture de particules 49 à solubiliser en suspension stable, les particules 49 d'une suspension étant de composition chimique identique,
- la génération d'au moins une goutte 16 comprenant au moins une particule 49 à solubiliser de la suspension stable de particules 49 et un milieu de culture 50 susceptible de contenir au moins une cellule vivante 4 et/ou au moins un produit dérivé de cellule vivante en suspension,
- l'introduction de la goutte 16 dans un tube 10,
- l'incubation de la goutte 16 dans le tube 10,
- l'éclairage du tube 10 par un faisceau lumineux incident, et
- la mesure à différents instants de la quantité de lumière du faisceau lumineux diffusée transversalement au faisceau incident par la goutte 16 dans le tube 10.

Avantageusement, le procédé comprend, en outre, la fourniture d'un système 1 de culture de cellules vivantes 4 et de mesure de solubilisation de particules 49 par au moins une cellule vivante et/ou au moins un produit dérivé de cellule vivante et la génération d'un train 14 de gouttes 16 ordonnées dans un fluide porteur 12.

Le train 14 de gouttes 16 est généré par le module de génération 12 du train de gouttes.

Par exemple, le train 14 de gouttes 16 est mis en circulation à un débit de 1mL/hr.

La zone d'incubation 30 du tube est maintenue à une température de 28°C.

L'incubation est effectuée dans la zone d'incubation 30 du tube 10.

L'incubation est effectuée par phases successives, une mesure est effectuée à la fin de chaque phase d'incubation.

Avantageusement, chaque phase d'incubation dure 30 minutes.

Par exemple, au total l'incubation dure entre 4 heures et 72 heures.

Lors de l'étape de mesure, la goutte 16 est placée dans la zone de mesure 32. La mesure comprend la mesure de néphélométrie dans la goutte 16.

Les sources émettrices de lumière sont avantageusement réglées pour émettre à une longueur d'onde comprise entre 350 nm et 700 nm.

Avantageusement, la mesure comprend en outre une étape de mesure de la quantité de cellules vivantes et/ou de leurs produits dérivés présents dans la goutte 16 aux différents instants, par exemple par la mesure d'un signal de fluorescence associé à la respiration ou à la modification du pH du milieu par les cellules vivantes 4 ou à une activité des produits dérivés de cellules vivantes présents.

Avantageusement, la mesure comprend en outre la réalisation d'une image de la goutte 16.

Avantageusement, le procédé comprend en outre, une étape de comparaison des valeurs obtenues aux différents instants et la détermination à l'issue de cette comparaison de la présence ou de l'absence dans la goutte de cellules vivantes 4 et/ou de leurs produits dérivés capables de solubiliser la particule.

Cette étape est par exemple mise en oeuvre par l'unité centrale 24.

Par exemple, lorsqu'il est détecté dans la goutte 16 que la particule 49 est solubilisée par au moins une cellule vivante et/ou au moins un produit dérivé de cellule vivante, la goutte 16 est récupérée dans le support de récupération 80.

Si la mesure correspond à un critère de sélection de l'utilisateur par exemple lorsqu'il est mesuré que le clone est encore en phase d'accélération de la croissance, la goutte 16 est remise dans la zone d'incubation 30 par le dispositif de mise en circulation 18. Le critère est, par exemple, une quantité de biomasse finale. Par exemple, lorsqu'il est détecté que la goutte 16 ne comprend pas de cellules vivantes capables de solubiliser la particule 49, la goutte 16 est évacuée. De même, si la mesure ne correspond pas aux critères de sélection de l'utilisateur la goutte 16 est évacuée.

Dans un autre mode de réalisation, les gouttes 16 sont toutes conservées dans la zone d'incubation 30 et continuent de passer dans le dispositif de mesure 22 jusqu'à la fin de l'expérience. A la fin de l'expérience, l'ensemble des gouttes 16 est envoyé vers la zone de récupération 26 où, selon la solubilisation détectée pour chaque goutte 16*,* elles sont récupérées dans le support de récupération 80 ou évacuées.

Avantageusement, le procédé comprend au préalable une étape de calibration des mesures de néphélométrie.

En se développant, les cellules vivantes 4 et leurs produits dérivés rendent la goutte 16 opaque en diffusant de plus en plus la lumière. A l'inverse, les particules 49 solubilisées diffusent de moins en moins la lumière.

Il est nécessaire de veiller à ce que le développement des cellules vivantes et/ou de leurs produits dérivés ne fausse pas la mesure.

A cet effet, la suspension de particules 49 à solubiliser est mise en goutte 16 sans le milieu de culture susceptible de contenir au moins une cellule vivante et/ou au moins un produit dérivé de cellule vivante en suspension.

La quantité de lumière diffusée transversalement au faisceau incident est mesurée.

Une suspension de cellules vivantes 4 et/ou de leurs produits dérivés préalablement cultivés dans le milieu de culture 50 envisagé pour effectuer les mesures est mise en goutte sans la suspension de particules 49 à solubiliser.

Avantageusement la composition du milieu de culture 50 est ajustée pour avoir un rendement, c'est à dire la quantité maximale de cellules vivantes qui peut croître dans ce milieu, qui permet la meilleure détection de la solubilisation. Le rendement est ajusté en optimisant la quantité dans le milieu d'une espèce limitante ayant une propriété nutritive essentielle. On choisit une espèce limitante dont la propriété nutritive est différente et indépendante de la propriété nutritive des particules à solubiliser. L'optimisation est réalisée en mesurant la croissance des cellules vivantes dans le milieu avec différentes concentrations de l'espèce limitante et sans la particule 49 à solubiliser. Lors des essais pour optimiser la quantité d'espèce limitante, si la particule 49 à solubiliser a une propriété nutritive essentielle à la croissance des cellules vivantes, son absence est compensée en ajoutant dans le milieu de culture 50 un produit de substitution comparable soluble ou une quantité des particules 49 minimum suffisante pour ne pas limiter la croissance des cellules vivantes.

La quantité de lumière diffusée transversalement au faisceau incident est mesurée.

De préférence, la quantité de lumière diffusée par la suspension de particules 49 seule est très supérieure à la quantité de lumière diffusée par la suspension de cellules vivantes 4 et/ou de leurs produits dérivés seule.

Par exemple, la quantité de lumière diffusée par la suspension de particules 49 est au moins dix fois supérieure à la quantité de lumière diffusée par la suspension de cellules vivantes 4 et/ou de leurs produits dérivés.

Si la quantité de lumière diffusée par la suspension de particules est inférieure ou peu supérieure à la quantité de lumière diffusée par la suspension de cellules vivantes 4 et/ou de leurs produits dérivés, la concentration de la suspension de particules peut être modifiée pour ajuster la lumière diffusée par les particules sans cellules vivantes ni leurs produits dérivés. Si cela ne suffit pas, la taille des particules ou le dispositif de mesure 22 peuvent être modifiés. Par exemple, les modifications du dispositif de mesure 22 peuvent porter sur l'angle de mesure par rapport au faisceau incident, la polarisation et la longueur d'onde du faisceau incident, et l'ouverture numérique du système optique utilisé pour mesurer la lumière diffusée.

Le procédé permet ainsi de discriminer des cellules vivantes et/ou leurs produits dérivés capables de solubiliser des particules dans des échantillons variés et pour de multiples applications.

Par exemple, des échantillons de sol ou environnementaux afin de déterminer l'activité de microorganismes d'un environnement particulier, ou des échantillons du microbiote intestinal humain ou animal, ou pour la recherche de microorganisme capables d'éliminer des particules polluantes, ou pour la recherche de microorganismes capables de solubiliser la cellulose ou la lignine pour la production de bioéthanol.

Le procédé permet une analyse précise et rapide des capacités de consommation ou de solubilisation de composés non solubles par des cellules vivantes et/ou leurs produits dérivés dans un milieu de culture.

La mesure de plusieurs signaux permet également de suivre d'autres paramètres physico-chimiques ou biologiques comme le pH, le stress cellulaire, l'activation de voies métaboliques, la consommation de substrat spécifique. Ces paramètres peuvent être corrélés ou comparés à l'activité de solubilisation au cours du temps. La séquence temporelle des activités ou des modifications du milieu peut également être identifiée.

La combinaison de l'ensemble de ces mesures sur la durée d'incubation permet de discriminer des cellules vivantes et/ou leurs produits dérivés d'après un grand nombre de critères et donc de mieux les identifier, les classifier ou les sélectionner.

### Exemples de mise en œuvre du procédé selon l'invention

### Exemple 1: recherche de cellules vivantes et/ou leurs produits dérivés solubilisateurs de phosphate

### 1. Matériel et Méthodes

### 1.1 Particules

Les particules sont des particules d'hydroxyapatite avec ces caractéristiques à pH 6,6 :
Diamètre médian : 0,40 µm
Diamètre du premier décile : 0,29 µm
Diamètre du neuvième décile : 0,63 µm

L'hydroxyapatite a une densité de 3,8 et un indice de réfraction compris entre 1,630 et 1,667.

### 1.2 Polymère dispersant

Le polymère utilisé est du polyacrylate en solution aqueuse, de masse moléculaire 15 kDa par chaîne, soit environ 150 résidus par chaîne. La concentration en polymère dispersant est de 350 mg/l, pour 1g/l de particules d'hydroxyapatite, de diamètre médian 400 nm. En particulier le polyacrylate utilisé est fourni par Merck (référence Sigma-Aldrich 416037).

Une concentration en polyacrylate de 35 mg/L donne également d'excellents résultats.

La quantité de dispersant nécessaire pour stabiliser une suspension dépend de la granularité des particules et de leur surface totale par unité de volume de la suspension.

### 1.3 Milieu de culture

Pour la culture des cellules vivantes, des milieux riches et synthétiques classiques ont été utilisés. Le milieu riche le plus utilisé est une variante du milieu Pikovskaya comprenant moins de phosphate de calcium :

**[Table 1] composition du milieu riche**

| Ingrédient | Quantité en grammes par litre |
|---|---|
| Extrait de levure | 0,5 |
| Dextrose | 10 |
| Hydroxyapatite | 1 |
| Sulfate d'ammonium | 0,5 |
| Chlorure de sodium | 0,2 |
| Chlorure de potassium | 0,2 |
| Sulfate de magnésium | 0,1 |
| Sulfate de manganèse | 1.10⁻⁴ |
| Sulfate de fer | 1.10⁻⁴ |

Le milieu synthétique le plus utilisé est le suivant :

**[Table 2] composition du milieu synthétique**

| Ingrédient | Quantité en grammes par litre |
|---|---|
| (NH₄)₂SO₄ | 0,5 |
| NaCl | 0,2 |
| MgSO₄.7H2O | 0,1 |
| KCl | 0,2 |
| MnSO4.H2O | 0,002 |
| FeSO₄.7H2O | 0,002 |
| CaCl2 | 0,083 |
| Hydrate d'acide 2-(N-morpholino)éthanosulfonique | 3,2 |
| NaOH | 0,52 |
| Glucose | 3,6 |
| Hydroxyapatite | 1 |

### 1.4 Méthodes

Un échantillon de cellules vivantes et/ou de leurs produits dérivés du sol est mis en suspension dans le milieu riche ci-dessus. Un train de gouttes est généré dans un tube transparent par un système MilliDrop Analyzer en inoculant dans chaque goutte la suspension de microorganismes, la suspension de particules d'hydroxyapatite, et une solution de résazurine.

Chaque goutte a un volume de 600 nL environ.

Les gouttes sont placées en incubation et une mesure est effectuée sur chacune des gouttes toutes les 30 minutes environ, comprenant une mesure de quantité de lumière diffusée transversalement à un rayon lumineux incident vers le tube, et une mesure de fluorescence.

### 2. Résultats

Les résultats sont représentés sur la figure 2 qui représente la quantité de lumière diffusée et la fluorescence en fonction de la durée d'incubation.

Avec ces conditions, la chute de quantité de lumière diffusée est nette.

Le signal de résazurine indique que les gouttes 242 et 284 comprennent au moins une cellule vivante aérobie, contrairement à la goutte 292 dont la courbe reste sensiblement constante.

Seule la goutte 284 fait chuter la quantité de lumière diffusée, ce qui indique qu'elle comprend au moins une cellule vivante et/ou au moins un produit dérivé de cellule vivante capable de solubiliser le phosphate.

Le ou les microorganismes présents dans la goutte 292 ne sont pas capables de solubiliser le phosphate.

La chute de quantité de lumière diffusée causée par la solubilisation des particules d'hydroxyapatite est dix fois supérieure à l'augmentation de ce signal causé par la croissance microbienne.

Suivant le résultat, les gouttes peuvent être récupérées ou non pour poursuivre l'analyse des microorganismes qu'elles contiennent.

La figure 3 représente la quantité de lumière diffusée par dix-neuf gouttes en fonction de la durée d'incubation. Certaines gouttes comprennent des cellules vivantes et/ou leurs produits dérivés capables de solubiliser le phosphate au bout de trente heures d'incubation environ, et d'autres comprennent des cellules vivantes et/ou leurs produits dérivés capables de solubiliser le phosphate au bout d'une durée plus importante, par exemple entre quarante et quarante-cinq heures d'incubation environ.

Sur les gouttes restantes, il n'est pas possible de distinguer les gouttes comprenant des cellules vivantes et/ou leurs produits dérivés non solubilisateurs de phosphate des gouttes ne comprenant pas de cellules vivantes et/ou de leurs produits dérivés.

### Exemple 2 : recherche de microorganismes et/ou de cellules vivantes et/ou leurs dérivés solubilisateurs de chitine

### 1. Matériel et Méthodes

### 1.1 Particules et milieu de culture

Des particules de chitine sont réalisées par dissolution dans de l'acide concentré (HCl) puis re-précipitation (selon la méthode de : Murthy N, Bleakley B. Simplified Method of Preparing Colloidal Chitin Used For Screening of Chitinase- Producing Microorganisms. 2012;10(2):1-5).

Ces particules, dont le diamètre est inférieur à 5µm peuvent être intégrées dans des gouttes et diffusent la lumière transversalement au faisceau incident. Les particules de chitine sont intégrées dans un milieu de culture sans sucre.

**[Table 3] composition du milieu contenant de la chitine**

| Ingrédient | Quantité en grammes par litre |
|---|---|
| Chitine | 15 |
| Extrait de levure | 0,5 |
| (NH₄)₂SO₄ | 1,0 |
| MgSO₄.7H₂O | 0,3 |
| KH₂PO₄ | 1,36 |

### 1.2 Méthodes

Les méthodes sont identiques à celles de l'exemple 1.

### 2. Résultats

Les cellules vivantes et/ou leurs produits dérivés_capables d'hydrolyser la chitine font chuter la quantité de lumière diffusée de façon similaire aux particules de phosphate.

### Exemple 3: recherche de cellules vivantes et/ou de leurs produits dérivés solubilisateurs de cellulose

### 1.1 Particules et milieu de culture

Des nanofibrilles de cellulose sont disponibles en suspension dans le commerce. Un milieu de culture pauvre contenant ces nanofibrilles comme seule source de carbone et d'énergie est réalisé.

**[Table 4] composition du milieu contenant des nanofibrilles de cellulose**

| Ingrédient | Quantité en grammes par litre |
|---|---|
| Na₂HPO₄ | 6,78 |
| KH₂PO₄ | 3 |
| NH₄Cl | 1 |
| NaCl | 0,5 |
| MgSO4 | 0,06 |
| Cellulose | 3,6 |

### 1.2 Méthodes

Les méthodes sont identiques à celles de l'exemple 1.

### 2. Résultats

De manière similaire à la chitine, les cellules vivantes et/ou leurs produits dérivés capables d'hydrolyser la cellulose font chuter la quantité de lumière diffusée.

## Revendications

1. Procédé de mesure de solubilisation de particules (49) par au moins une cellule vivante (4) et/ou au moins un produit dérivé de cellule vivante, le procédé comprenant les étapes suivantes :
- la fourniture de particules (49) à solubiliser en suspension stable, les particules (49) d'une suspension étant de composition chimique identique,
- la génération d'au moins une goutte (16) comprenant au moins une particule (49) à solubiliser de la suspension stable de particules (49) et un milieu de culture (50) susceptible de contenir au moins une cellule vivante (4) et/ou au moins un produit dérivé de cellule vivante en suspension,
- l'introduction de la goutte (16) dans un tube (10),
- l'incubation de la goutte (16) dans le tube (10),
- l'éclairage du tube (10) par un faisceau lumineux incident, et
- la mesure à différents instants de la quantité de lumière du faisceau lumineux diffusée transversalement au faisceau incident par la goutte (16) dans le tube (10).

2. Procédé de mesure selon la revendication 1, comprenant en outre la comparaison des valeurs obtenues aux différents instants pour chaque goutte (16) et la détermination à l'issue de cette comparaison de la présence ou de l'absence dans la goutte (16) de cellules vivantes (4) et/ou de leurs produits dérivés capables de solubiliser la particule (49).

3. Procédé de mesure selon la revendication 1 ou 2, comprenant en outre une étape de mesure de la quantité de cellules vivantes et/ou de leurs produits dérivés présents dans la goutte (16) aux différents instants.

4. Procédé de mesure selon l'une quelconque des revendications 1 à 3, dans lequel les particules (49) de la suspension stable sont en suspension dans une solution aqueuse comprenant au moins une substance stabilisant la suspension de particules.

5. Procédé de mesure selon l'une quelconque des revendications 1 à 4, dans lequel le tube (10) présente un diamètre intérieur compris entre 0,1 mm et 3 mm.

6. Procédé de mesure selon l'une quelconque des revendications 1 à 5, dans lequel au moins 90% des particules (49) dans la suspension stable présentent un rayon compris entre 10 nm et 10 µm, de préférence compris entre 100 nm et 500 nm.

7. Procédé de mesure selon l'une quelconque des revendications 1 à 6, dans lequel au moins une goutte (16) contient au moins une particule (49) à solubiliser de la suspension stable de particules et un milieu de culture (50) contenant au moins une cellule vivante (4) et/ou au moins un produit dérivé de cellule vivante en suspension.

8. Procédé de mesure selon l'une quelconque des revendications 1 à 7, comprenant la génération d'un train de gouttes (16) ordonnées dans un fluide porteur (40), le train de gouttes (16) comprenant au moins une goutte (16) comprenant au moins une particule (49) à solubiliser en suspension stable et un milieu de culture (50) susceptible de contenir au moins une cellule vivante (4) et/ou au moins un produit dérivé de cellule vivante en suspension.

9. Procédé de mesure selon l'une quelconque des revendications 3 et 4 à 8 lorsqu'elles dépendent de la revendication 3, dans lequel l'étape de mesure de la quantité de cellules vivantes (4) et/ou de leurs produits dérivés présents dans la goutte (16) aux différents instants comprend la mesure d'un signal de fluorescence associé à la respiration ou à la modification du pH du milieu par les cellules vivantes (4) et/ou leurs produits dérivés présents dans la goutte (16).

10. Kit adapté pour la mise en oeuvre du procédé de mesure selon l'une quelconque des revendications précédentes, comprenant des particules (49) en suspension stable, les particules (49) d'une suspension étant de composition chimique identique, un milieu de culture (50) adapté pour cultiver des cellules vivantes (4) en suspension susceptibles de solubiliser lesdites particules (49) et un système (1) de culture de cellules vivantes (4) et de mesure de solubilisation de particules (49) par au moins une cellule vivante et/ou au moins un produit dérivé de cellule vivante comprenant au moins:
- un tube (10),
- un module (12) de génération d'un train de gouttes (16) ordonnées dans un fluide porteur (40),
- un dispositif de mise en circulation (18) du train de gouttes (16) dans le tube (10),
- un dispositif d'incubation (20) du train de gouttes (16) dans le tube (10), et
- un dispositif (22) de mesure comprenant un dispositif (23) de projection d'un faisceau lumineux incident vers le tube (10) et de mesure de la quantité de lumière diffusée transversalement au faisceau incident.

11. Kit selon la revendication 10, dans lequel le dispositif de mesure (22) est propre à mesurer la quantité de cellules vivantes (4) et/ou de leurs produits dérivés présents dans une goutte (16).

12. Kit selon la revendication 10 ou 11, dans lequel les particules (49) en suspension sont des particules (49) d'hydroxyapatite en suspension dans une solution aqueuse comprenant du polyacrylate et le milieu de culture (50) comprend un sucre, du sulfate d'ammonium, du chlorure de potassium, du sulfate de magnésium, du sulfate de manganèse et du sulfate de fer.

13. Kit selon la revendication 10 ou 11, dans lequel le milieu de culture (50) est dépourvu de sucre ou toute autre source de carbone et d'énergie, et dans lequel les particules (49) en suspension constituent la seule source de carbone et d'énergie pour la croissance de cellules vivantes (4).

14. Kit selon la revendication 13, dans lequel les particules (49) en suspension sont des particules (49) de chitine, ou les particules (49) en suspension sont des particules (49) de cellulose, ou les particules (49) en suspension sont des particules (49) de lignine, ou les particules (49) en suspension sont des particules (49) microplastiques, ou les particules (49) en suspension sont des particules (49) de polysaccharide.

## Patentansprüche

1. Verfahren zur Messung der Solubilisierung von Partikeln (49) durch mindestens eine lebende Zelle (4) und/oder mindestens ein von einer lebenden Zelle stammendes Produkt, wobei das Verfahren die folgenden Schritte umfasst:
- das Bereitstellen von Partikeln (49), die löslich zu machen sind, in einer stabilen Suspension, wobei die Partikel (49) einer Suspension eine identische chemische Zusammensetzung aufweisen,
- das Erzeugen mindestens eines Tropfens (16), der mindestens ein löslich zu machendes Partikel (49) der stabilen Suspension von Partikeln (49) und ein Kulturmediums (50) umfasst, das mindestens eine lebende Zelle (4) und/oder mindestens ein von einer lebenden Zelle stammendes Produkt suspendiert enthalten kann,
- das Einführen des Tropfens (16) in ein Rohr (10),
- das Inkubieren des Tropfens (16) im Rohr (10),
- das Beleuchten des Rohrs (10) mit einem einfallenden Lichtstrahl und
- zu verschiedenen Zeitpunkten das Messen der Lichtmenge des Lichtstrahls, die vom Tropfen (16) im Rohr (10) quer zum einfallenden Strahl gestreut wird.

2. Messverfahren nach Anspruch 1, das außerdem den Vergleich von Werten umfasst, zu den verschiedenen Zeitpunkten für jeden Tropfen (16) erhalten werden, und nach diesem Vergleich das Bestimmen des Vorhandenseins oder Fehlens von lebenden Zellen (4) und/oder von davon stammenden Produkten, die dazu fähig sind, das Partikel (49) löslich zu machen, im Tropfen (16).

3. Messverfahren nach Anspruch 1 oder 2, das außerdem einen Schritt des Messens der Menge von lebenden Zellen und/oder von davon stammenden Produkten, die im Tropfen (16) vorhanden sind, zu den verschiedenen Zeitpunkten umfasst.

4. Messverfahren nach einem der Ansprüche 1 bis 3, wobei die Partikel (49) der stabilen Suspension in einer wässrigen Lösung suspendiert sind, die mindestens eine die Partikelsuspension stabilisierende Substanz umfasst.

5. Messverfahren nach einem der Ansprüche 1 bis 4, wobei das Rohr (10) einen Innendurchmesser zwischen 0,1 mm und 3 mm aufweist.

6. Messverfahren nach einem der Ansprüche 1 bis 5, wobei mindestens 90 % der Partikel (49) in der stabilen Suspension einen Radius zwischen 10 nm und 10 µm, vorzugsweise zwischen 100 nm und 500 nm, aufweisen.

7. Messverfahren nach einem der Ansprüche 1 bis 6, wobei mindestens ein Tropfen (16) mindestens ein löslich zu machendes Partikel (49) der stabilen Partikelsuspension und ein Kulturmedium (50) enthält, das mindestens eine lebende Zelle (4) und/oder mindestens ein von der lebenden Zelle stammendes Produkt suspendiert enthält.

8. Messverfahren nach einem der Ansprüche 1 bis 7, das die Erzeugung eines Stroms von geordneten Tropfen (16) in einer Trägerflüssigkeit (40) umfasst, wobei der Strom von Tropfen (16) mindestens einen Tropfen (16) umfasst, der mindestens ein löslich zu machendes Partikel (49) in einer stabilen Suspension und ein Kulturmedium (50) umfasst, das mindestens eine lebende Zelle (4) und/oder mindestens ein von einer lebenden Zelle stammendes Produkt suspendiert enthalten kann.

9. Messverfahren nach einem der Ansprüche 3 und 4 bis 8, wenn abhängig von Anspruch 3, wobei der Schritt des Messens der Menge von lebenden Zellen (4) und/oder von davon stammenden Produkten, die im Tropfen (16) vorhanden sind, zu den verschiedenen Zeitpunkten das Messen eines Fluoreszenzsignals umfasst, das mit der Atmung oder der Modifizierung des pH-Werts des Mediums durch die lebenden Zellen (4) und/oder davon stammende Produkte, die im Tropfen (16) vorhanden sind, in Zusammenhang steht.

10. Kit, das zur Durchführung des Messverfahrens nach einem der vorhergehenden Ansprüche ausgelegt ist, das stabil suspendierte Partikel (49), wobei die Partikel (49) einer Suspension eine identische chemische Zusammensetzung aufweisen, ein Kulturmedium (50), das zur Kultivierung von suspendierten lebenden Zellen (4) ausgelegt ist, welches die Partikel (49) in Lösung überführen können, und ein System (1) zur Kultur von lebenden Zellen (4) und zur Messung der Solubilisierung von Partikeln (49) durch mindestens eine lebende Zelle und/oder mindestens ein von einer lebenden Zelle stammendes Produkt umfasst, das zumindest Folgendes umfasst:
- ein Rohr (10),
- ein Modul (12) zur Erzeugung eines Stroms von geordneten Tropfen (16) in einer Trägerflüssigkeit (40),
- eine Vorrichtung zum Zirkulierenlassen (18) des Stroms von Tropfen (16) im Rohr (10),
- eine Vorrichtung zum Inkubieren (20) des Stroms von Tropfen (16) im Rohr (10) und
- eine Messvorrichtung (22), die eine Vorrichtung (23) zur Projektion eines einfallenden Lichtstrahls auf das Rohr (10) und zur Messung der quer zum einfallenden Strahl gestreuten Lichtmenge umfasst.

11. Kit nach Anspruch 10, wobei die Messvorrichtung (22) zur Messung der Menge von lebenden Zellen (4) und/oder von davon stammenden Produkten, die in einem Tropfen (16) vorhanden sind, geeignet ist.

12. Kit nach Anspruch 10 oder 11, wobei es sich bei den suspendierten Partikeln (49) um Hydroxyapatit-Partikel (49) suspendiert in einer Polyaycrylat umfassenden wässrigen Lösung handelt und das Kulturmedium (50) einen Zucker, Ammoniumsulfat, Kaliumchlorid, Magnesiumsulfat, Mangansulfat und Eisensulfat umfasst.

13. Kit nach Anspruch 10 oder 11, wobei das Kulturmedium (50) frei von Zucker oder jeglicher anderen Kohlenstoff- und Energiequelle ist und wobei die suspendierten Partikel (49) die einzige Kohlenstoff- und Energiequelle für das Wachstum von lebenden Zellen (4) darstellen.

14. Kit nach Anspruch 13, wobei es sich bei den suspendierten Partikeln (49) um Partikel (49) aus Chitin handelt oder es sich bei den suspendierten Partikeln (49) um Partikel (49) aus Cellulose handelt oder es sich bei den suspendierten Partikeln (49) um Partikel (49) aus Lignin handelt oder es sich bei den suspendierten Partikeln (49) um Partikel (49) aus Mikroplastik handelt oder es sich bei den suspendierten Partikeln (49) um Partikel (49) aus Polysaccharid handelt.

## Claims

1. A method for measuring solubilization of particles (49) by at least one living cell (4) and/or at least one derived product of a living cell, the method comprising the following steps:
- supplying particles to be solubilized (49) in stable suspension, the particles (49) of a suspension being of identical chemical composition,
- generating at least one drop (16) comprising at least one particle to be solubilized (49) of the stable suspension of particles (49) and a culture medium (50) that may contain at least one living cell (4) and/or at least one derived product of a living cell in suspension,
- introducing the drop (16) into a tube (10),
- incubating the drop (16) in the tube (10),
- illuminating the tube (10) with an incident light beam, and
- measuring, at different time points, the quantity of light of the light beam scattered transversely to the incident beam by the drop (16) in the tube (10).

2. The method of measurement as claimed in claim 1, further comprising comparison of the values obtained at the different time points for each drop (16), and at the end of this comparison, determining the presence or absence, in the drop (16), of living cells (4) and/or of the derived products thereof capable of solubilizing the particle (49).

3. The method of measurement as claimed in claim 1 or 2, further comprising a step of measuring the quantity of living cells and/or of the derived products thereof present in the drop (16) at the different time points.

4. The method of measurement as claimed in any one of claims 1 to 3, in which the particles (49) of the stable suspension are in suspension in an aqueous solution comprising at least one substance for stabilizing the suspension of particles.

5. The method of measurement as claimed in any one of claims 1 to 4, in which the tube (10) has an inside diameter between 0.1 mm and 3 mm.

6. The method of measurement as claimed in any one of claims 1 to 5, in which at least 90% of the particles (49) in the stable suspension have a radius between 10 nm and 10 um, preferably between 100 nm and 500 nm.

7. The method of measurement as claimed in any one of claims 1 to 6, in which at least one drop (16) contains at least one particle to be solubilized (49) of the stable suspension of particles and a culture medium (50) containing at least one living cell (4) and/or at least one derived product of a living cell in suspension.

8. The method of measurement as claimed in any one of claims 1 to 7, comprising generating a train of ordered drops (16) in a carrying fluid (40), the train of drops (16) comprising at least one drop (16) comprising at least one particle to be solubilized (49) in stable suspension and a culture medium (50) that may contain at least one living cell (4) and/or at least one derived product of a living cell in suspension.

9. The method of measurement as claimed in any one of claims 3 and 4 to 8 when they are dependent on claim 3, in which the step of measuring the quantity of living cells (4) and/or of the derived products thereof present in the drop (16) at the different time points comprises measurement of a fluorescence signal associated with respiration or with alteration of the pH of the medium by the living cells (4) and/or the derived products thereof present in the drop (16).

10. A kit suitable for carrying out the method of measurement as claimed in any one of the preceding claims, comprising particles (49) in stable suspension, the particles (49) of a suspension being of identical chemical composition, a culture medium (50) suitable for culturing living cells (4) in suspension that are able to solubilize said particles (49) and a system (1) for culture of living cells (4) and for measuring solubilization of particles (49) by at least one living cell and/or at least one derived product of a living cell comprising at least:
- a tube (10),
- a module (12) for generating a train of ordered drops (16) in a carrying fluid (40),
- a circulating device (18) of the train of drops (16) in the tube (10),
- an incubating device (20) of the train of drops (16) in the tube (10), and
- a measuring device (22) comprising a device (23) for projection of an incident light beam onto the tube (10) and measuring the quantity of light scattered transversely to the incident beam.

11. The kit as claimed in claim 10, in which the measuring device (22) is suitable for measuring the quantity of living cells (4) and/or of the derived products thereof present in a drop (16).

12. The kit as claimed in claim 10 or 11, in which the particles (49) in suspension are particles (49) of hydroxyapatite in suspension in an aqueous solution comprising polyacrylate, and the culture medium (50) comprises a sugar, ammonium sulfate, potassium chloride, magnesium sulfate, manganese sulfate and iron sulfate.

13. The kit as claimed in claim 10 or 11, in which the culture medium (50) lacks sugar or any other source of carbon and of energy, and in which the particles (49) in suspension constitute the only source of carbon and of energy for growth of living cells (4).

14. The kit as claimed in claim 13, in which the particles (49) in suspension are particles (49) of chitin, or the particles (49) in suspension are particles (49) of cellulose, or the particles (49) in suspension are particles (49) of lignin, or the particles (49) in suspension are microplastic particles (49), or the particles (49) in suspension are particles (49) of polysaccharide.
